# EUROPEAN PATENT APPLICATION

(11) **EP 1 416 356 A1**
(43) Date of publication of application: **06.05.2004**
(21) Application number: 02024270.7
(22) Date of filing: 31.10.2002
(51) Int. Cl.: G06F 1/16, G06F 3/14

(54) **Portable computer comprising an upgrading apparatus**

(71) Applicant: ELITEGROUP COMPUTER SYSTEMS CO.,LTD., Taipei (TW)
(72) Inventor: Ting, Yi-Chun, Taipei (TW); Wang, Jau-Chin, Taipei (TW); Huang, Yi-Hung, Taipei (TW); Feng, Han-Chang, Taipei (TW)
(74) Representative: Viering, Jentschura & Partner

(57) **Abstract**

An upgrading apparatus provides upgrading function for a portable computer. The portable computer has a body, a display, a keyboard and a motherboard. The upgrading apparatus comprises an accommodating chamber placed at predetermined location of the body; an expansion unit in the accommodating unit; and an upgrading graphic card connected to the expansion unit. The expansion unit is electrically connected to the motherboard whereby a user can update the function of the portable computer by assembling the upgrading graphic card to the expansion unit and connecting the expansion unit to the motherboard.

## Description

### Field of the invention

The present invention relates to an upgrading apparatus for portable computer, especially to an upgrading apparatus rendering user with great convenience to upgrade the performance for portable computer.

### Background of the invention

The conventional portable computer, such as notebook computer, DESKNOTE or mobile personal computer, generally has built-in graphic card installed on a motherboard of the portable computer. More particularly, the motherboard is encapsulated in a chassis of the portable computer. Due to the compactness and versatility of the portable computer, it is difficult for user to disassemble the chassis of the portable computer for upgrading (replacing) components such as graphic card installed on the motherboard. If the user relies much on the graphic ability of a portable computer and the graphic ability becomes antiquate, the user is forced to buy a new portable computer with powerful graphic ability. Alternatively, the user should send the old portable computer to the dealer shop for replacing with a new motherboard with more advanced graphic card. As the fast advancement of graphic card, it is urgent interest of consumer to have an upgrading apparatus rendering user with great convenience to upgrade the performance for portable computer.

### Summary of the invention

It is the object of the present invention to provide an upgrading apparatus for portable computer, which uses an upgrading graphic card for upgrading a portable computer including a notebook computer, a DESKNOTE and a mobile personal computer.

To achieve above object, the present invention provides an upgrading apparatus for portable computer. The portable computer has a body, a display connected to the body, a keyboard on a top face of the body and a motherboard contained in the body. The upgrading apparatus comprises an accommodating unit placed at predetermined location of the body; an expansion unit in the accommodating unit; and an upgrading unit connected to the expansion unit. The expansion unit is electrically connected to the motherboard whereby a user can update the function of the portable computer by assembling the upgrading unit to the expansion unit and connecting the expansion unit to the motherboard. The expansion unit is one of an accelerated graphic port (AGP), a peripheral component interconnect (PCI) and an RGB digital video data port. The upgrading unit is an upgrading graphic card with a video graphic accelerator (VGA) port for electrically connecting to the expansion unit.

The various objects and advantages of the present invention will be more readily understood from the following detailed description when read in conjunction with the appended drawing, in which:

### Brief description of drawing:

Fig. 1 shows an exploded view of the inventive upgrading apparatus arranged on an edge of a top face of a computer body;
Fig. 2 shows a perspective view of the inventive upgrading apparatus arranged on an edge of a top face of a computer body;
Fig. 3 shows an exploded view of the inventive upgrading apparatus arranged on an edge of a bottom portion of a computer body; and
Fig. 4 shows an exploded view of the inventive upgrading apparatus arranged on a bottom edge of a front end of a computer body;

### Detailed description of the invention

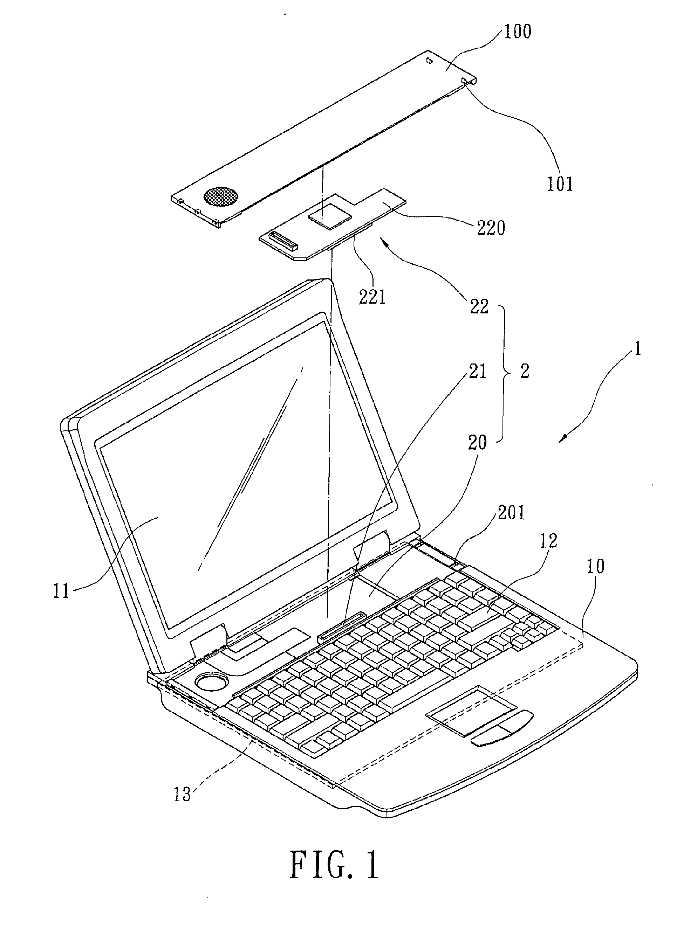

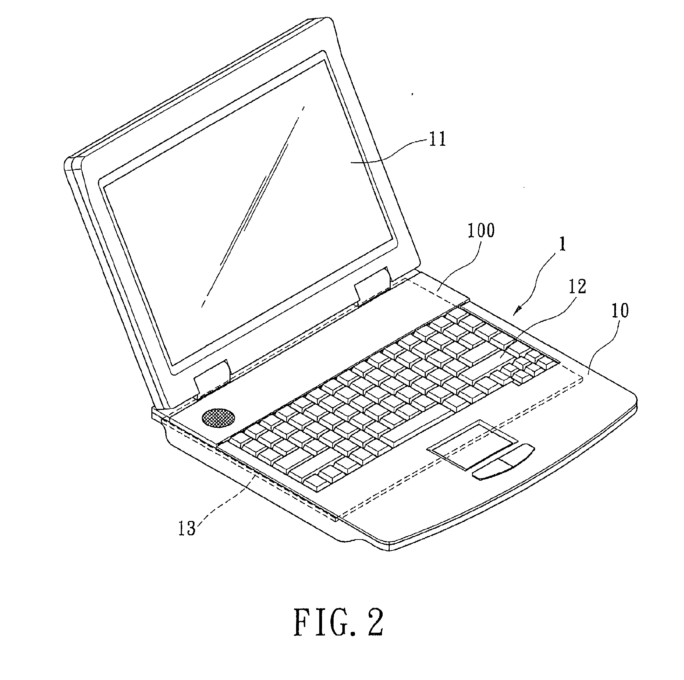

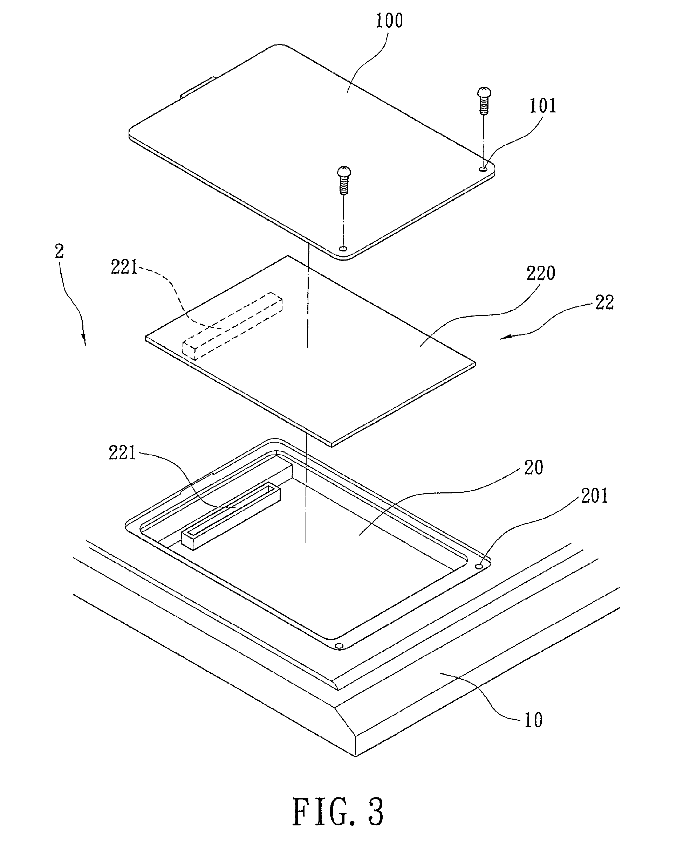

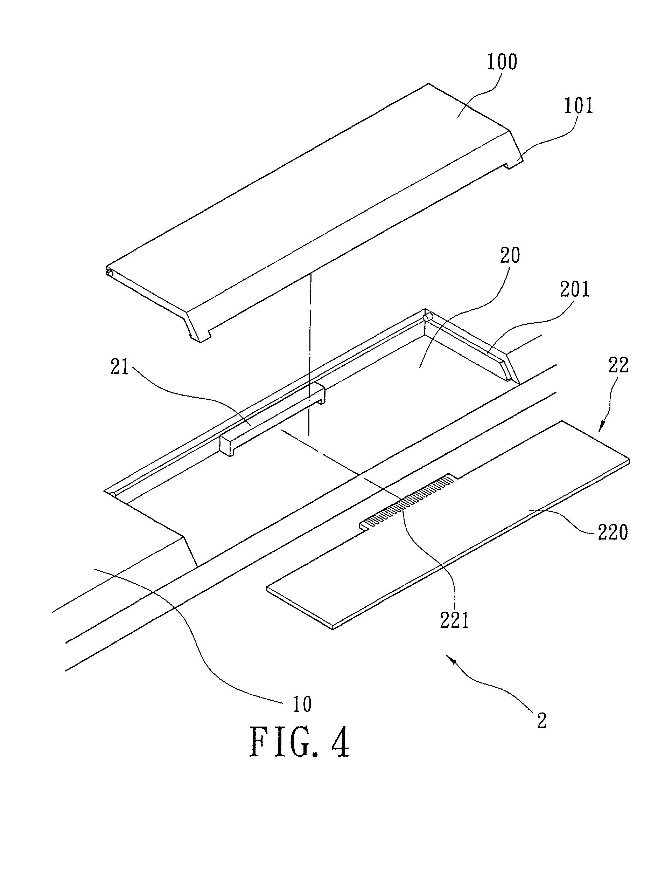

Figs. 1 to 4 show two preferred embodiments of the present invention. In Figs. 1 and 2, the upgrading apparatus 2 is provided at a top face of a computer body. In Figs. 3 and 4, the upgrading apparatus 2 is provided at a bottom face of a computer body. In those preferred embodiments of the present invention, the portable computer 1 can be one of a notebook computer, a DESKNOTE and a mobile personal computer. The portable computer 1 is composed of a body 10, a display 11 connected to the body 10, a keyboard 12 on a top face of the body 10 and a motherboard 13 contained in the body 10 and having a built-in graphic card (not shown).

The body 10 has a cover plate 100 with fastener 101. The fastener 101 can be a first embedding unit as shown in Fig. 1, a first locking unit as shown in Fig. 3, or a first snap unit as shown in Fig. 4.

The upgrading apparatus 2 comprises an accommodating unit 20, an expansion unit 21 arranged in the accommodating unit 20, and an upgrading unit 22 installed on the expansion unit 21. The accommodating unit 20 is formed in a space on top face of the body 1 and behind the keyboard 12 as shown in Fig. 1, or in a space on bottom edge of the body 1. The accommodating unit 20 may be in the form of an accommodating chamber. The expansion unit 21 can be accelerated graphic port (AGP), peripheral component interconnect (PCI) or an RGB digital video data port. The upgrading unit 22 is an upgrading graphic card. The accommodating unit 20 has a retainer 201. The retainer 201 can be a second embedding element for embedding with the first embedding element as shown in Fig. 1, a second screwing element for screwing with the first screwing element as shown in Fig. 3, or a second locking element for locking with the first locking element as shown in Fig. 4. The upgrading unit 22 has a card-like body 220 and a VGA port 221 on bottom edge of the card-like body 220 or lateral edge of the card-like body 220.

The expansion unit 21. for external device is electrically connected to the motherboard 13 of the portable computer. The upgrading unit 22 is electrically connected to the expansion unit 21 and functioned as an external upgrading device. The cover plate 100 shields the accommodating unit 20 and the upgrading unit 22 (the external graphic card) is installed within the accommodating unit 20. To activate the external graphic card, the built-in graphic card of the portable computer is disabled and the function of the external graphic card is enabled by properly setting the portable computer. The power of the external graphic card can be supplied by the motherboard 13. Therefore, an additional power source is not necessary. Moreover, additional space (not shown) for heat dissipation is preserved in the space for placing the accommodating unit 20. The portable computer can be adapted to automatically detect the arrangement of the external graphic card and select between the built-in graphic card and the external graphic card without complicated system setting. It should be noted the driver program for the external graphic card is also required to install like the situation in desktop computer.

To sum up, the upgrading apparatus for portable computer has following advantages:
1. The upgrading apparatus provides an upgrading graphic card for portable computer such as a notebook computer, a DESKNOTE and a mobile personal computer.
2. The upgrading apparatus utilizes spare space behind the keyboard or in front of the keyboard (beside the touch pad) or on bottom of the computer body to provide accommodating unit for placing an external graphic card connected to a motherboard through a dedicated connector. The user can easily update the graphic capability for portable computer.
3. The upgrading apparatus allows a layman user to easily install an external graphic card to a portable computer such as a notebook computer, a DESKNOTE and a mobile personal computer.
4. The upgrading apparatus provides a low-cost solution for upgrade, i.e., without the expense of new motherboard or even new computer.
5. The motherboard has basic and built-in graphic card for user. Therefore, the upgrading apparatus provides flexibility for upgrading.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. An upgrading apparatus for portable computer, the portable computer having a body, a display connected to the body, a keyboard on a top face of the body and a motherboard contained in the body, the upgrading apparatus comprising
an accommodating unit placed at predetermined location of the body;
an expansion unit in the accommodating unit; and
an upgrading unit connected to the expansion unit;
the expansion unit being electrically connected to the motherboard
whereby a user can update the function of the portable computer by assembling the upgrading unit to the expansion unit and connecting the expansion unit to the motherboard.

2. The upgrading apparatus for portable computer as in claim 1, wherein the portable computer is one of a notebook computer, a DESKNOTE and a mobile personal computer.

3. The upgrading apparatus for portable computer as in claim 1, wherein the motherboard has a built-in graphic card.

4. The upgrading apparatus for portable computer as in claim 1, wherein the accommodating unit is an accommodating chamber.

5. The upgrading apparatus for portable computer as in claim 1, wherein the expansion unit is one of an accelerated graphic port (AGP), a peripheral component interconnect (PCI) and an RGB digital video data port.

6. The upgrading apparatus for portable computer as in claim 5, wherein the upgrading unit is an upgrading graphic card with a video graphic accelerator (VGA) port for electrically connecting to the expansion unit.

7. An upgrading graphic card for portable computer having a card-like body and a video graphic accelerator (VGA) port at a predetermined position of the body.

8. The upgrading graphic card for portable computer as in claim 7, wherein the VGA port is arranged at a bottom edge of the body.

9. The upgrading graphic card for portable computer as in claim 7, wherein the VGA port is arranged at a lateral edge of the body.

10. A portable computer comprising at least a body, a display connected to the body, a keyboard on a top face of the body, a motherboard contained in the body, a built-in graphic card on the motherboard, an accommodating chamber placed at predetermined location of the body; an expansion unit in the accommodating chamber and electrically connected to the motherboard, and an upgrading graphic card with a video graphic accelerator (VGA) port for electrically connecting to the expansion unit.

11. The portable computer as in claim 10, further comprising a cover plate covering the accommodating chamber to encapsulate the upgrading graphic card in the accommodating chamber.

12. The portable computer as in claim 11, wherein the cover plate has a fastener.

13. The portable computer as in claim 12, wherein the fastener is a first embedding element.

14. The portable computer as in claim 13, wherein the accommodating chamber is formed on an edge of a top face of the body and having a second embedding element corresponding to the first embedding element.

15. The portable computer as in claim 12, wherein the fastener is a first locking element.

16. The portable computer as in claim 15, wherein the accommodating chamber is formed on a bottom edge of a front end of the body and having a second locking element corresponding to the first locking element.

17. The portable computer as in claim 12, wherein the fastener is a first screwing element.

18. The portable computer as in claim 15, wherein the accommodating chamber is formed on an edge of a bottom portion of the body and having a second screwing element corresponding to the first screwing element.
